# FASCICULE DE BREVET EUROPEEN

(11) **EP 3 566 117 B1**
(45) Date de publication et mention de la délivrance du brevet: **06.03.2024**
(21) Numéro de dépôt: 18701517.7
(22) Date de dépôt: 03.01.2018
(51) Int. Cl.: G06F 3/041

(54) **DALLE TACTILE VIBRANTE**
VIBRIERENDE TAKTILE FLIESE
VIBRATING TACTILE TILE

(30) Priorité: 04.01.2017 FR 1750070
(43) Date de publication de la demande: 13.11.2019
(73) Titulaire: Hap2u, 38400 Saint-Martin-d'Hères (FR)
(72) Inventeur: CHAPPAZ, Cedric, 38530 Pontcharra (FR); VEZZOLI, Eric, 38530 Pontcharra (FR)
(74) Mandataire: Cabinet Beaumont
(86) Numéro de dépôt international: PCT/FR2018/050017
(87) Numéro de publication internationale: WO 2018/127662

(56) Documents cités:
- EP-A2- 2 432 126
- EP-B1- 2 350 795
- WO-A1-98/29853
- DE-T2- 60 209 730
- FR-A1- 2 927 574
- FR-A1- 2 951 027
- US-A1- 2012 162 143
- US-B1- 6 741 237

## Description

### Domaine

La présente description concerne de façon générale les dalles tactiles pour dispositif électronique et, plus particulièrement, la réalisation d'une dalle tactile vibrante, à actionneurs piézoélectriques.

### Exposé de l'art antérieur

Des dalles tactiles sont largement utilisées dans de multiples dispositifs électroniques et, plus particulièrement pour créer des écrans tactiles, par exemple pour des téléphones mobiles, des tablettes tactiles, des interfaces de commande, etc.

Parmi les technologies utilisées pour créer des dalles tactiles, la présente description s'applique plus particulièrement à des dalles tactiles capables de modifier la sensation tactile au toucher, et utilisant des actionneurs piézoélectriques pour générer des ondes ultrasonores.

Le document EP-A-0 950 234 décrit un transducteur à grille pour écran tactile acoustique.

Le document US-A-2012/0162143 décrit une structure de montage de panneau tactile à fonction vibratoire.

Le document FR-A-2 951 027 décrit un résonateur piézoélectrique isolé des perturbations du substrat.

Le document EP 2 350 795 décrit un capteur tactile et procédé de détermination de la position d'un contact.

Le document EP 2 432 126 décrit un ensemble d'éléments de revêtement et procédé de fabrication d'un revêtement tactile d'une surface.

Le document FR 2 927 574 décrit un dispositif d'interface homme-machine et véhicule automobile comprenant un tel dispositif.

Le document DE 602 09 730 décrit un dispositif sensible au contact.

Le document US 6 741 237 décrit un écran tactile.

### Résumé

L'invention vise des dalles tactiles vibrantes selon les revendications 1 ou 2.

Un mode de réalisation propose une solution améliorant la résonance d'une dalle tactile vibrante.

Un mode de réalisation propose une solution permettant d'homogénéiser la propagation d'ondes ultrasonores sur une surface utile de la dalle tactile.

Un mode de réalisation propose une solution particulièrement adaptée à des dalles tactiles contraintes en périphérie.

Ainsi, un mode de réalisation prévoit une dalle tactile vibrante telle que définie dans les revendications.

Un mode de réalisation prévoit un dispositif électronique, comportant une dalle tactile.

Un mode de réalisation prévoit un téléphone mobile comportant une dalle tactile.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation très schématique en perspective éclatée d'un exemple de dispositif équipé d'une dalle tactile du type auquel s'appliquent les modes de réalisation décrits ;
les figures 2A et 2B représentent, de façon très schématique, un mode de réalisation d'une dalle tactile vibrante ; et
les figures 3A et 3B représentent, de façon très schématique, un autre mode de réalisation d'une dalle tactile vibrante.

### Description détaillée

Par souci de clarté, seuls les éléments qui sont utiles à la compréhension des modes de réalisation décrits ont été représentés et seront détaillés. En particulier, la commande des éléments piézoélectriques de la dalle ou interface tactile vibrante n'a pas été détaillée, les modes de réalisation décrits étant compatibles avec les procédés et circuits de commande usuels. De plus, les autres éléments et circuits du dispositif électronique n'ont pas non plus été détaillés, les modes de réalisation décrits étant là encore compatibles avec les éléments et circuits usuels.

Il est à noter que, sur les figures, les éléments structurels et/ou fonctionnels communs aux différents modes de réalisation peuvent présenter les mêmes références et peuvent disposer de propriétés structurelles, dimensionnelles et matérielles identiques. Par ailleurs, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que "vertical", "horizontal", etc., il est sauf précision contraire fait référence à l'orientation des figures ou à une position normale d'utilisation. Sauf précision contraire, les expressions "approximativement", "sensiblement" et "de l'ordre de" signifient à 10 % près, de préférence à 5 % près, ou à 10° près, de préférence à 5° près.

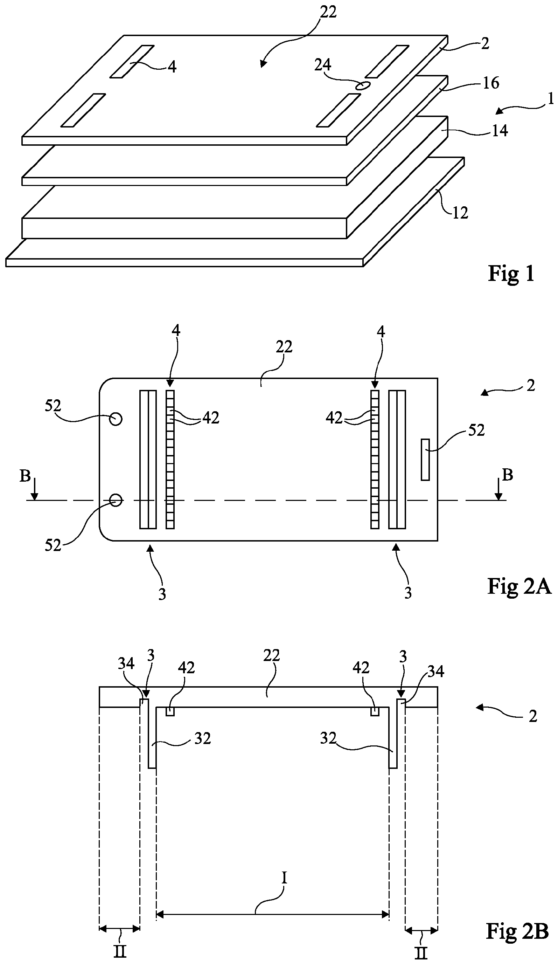

La figure 1 est une représentation très schématique en perspective éclatée d'un exemple de dispositif 1 équipé d'une dalle tactile du type auquel s'appliquent les modes de réalisation décrits.

On fera par la suite référence à un téléphone mobile de type smartphone. Toutefois, tout ce qui va être décrit s'applique plus généralement à tout dispositif ou équipement électronique à interface tactile vibrante, par exemple une tablette, un écran d'ordinateur, une montre, un dispositif médical, un terminal mobile, un pavé tactile, etc.

Le dispositif 1 comporte généralement un support ou boîtier 12 dans lequel sont logés un ou plusieurs éléments (symbolisés par un bloc 14), par exemple une unité de traitement, des mémoires, une batterie, des interfaces de communication sans fil, divers circuits de traitement et autres dispositifs. Un écran d'affichage 16 recouvre généralement l'ensemble pour maximiser la surface d'affichage. L'écran est surmonté d'une plaque 22 en verre, en plastique ou autre matériau transparent, formant une dalle ou interface tactile vibrante 2. Pour cela, des éléments piézoélectriques 4 sont généralement disposés sous la plaque 22. La forme (contour) de la plaque 22 est adaptée à la forme du dispositif et en particulier de son écran 16, et comporte généralement des orifices 24 ou zones dédiées au passage de boutons, actionneurs, etc. ou à l'accès à des accessoires de type capteur sonore, d'image, etc.

Des exemples de structures et de principes de commande et de fonctionnement d'une dalle tactile vibrante du type auxquels s'appliquent les modes de réalisation de la présente description sont décrits dans les documents FR-A-29755197, WO-A-201253061, EP-A2707787, US-A-2014327839, JP-A-2014513370, CA-A-2835348, et WO-A-2008116980, EP-A-1956466, JP-A-2010518500, CN-B-101632054, dont les contenus sont considérés comme faisant partie intégrante de la présente description. Ils sont incorporés par référence dans les conditions autorisées par la loi.

Ces interfaces tactiles vibrantes utilisent des éléments piézoélectriques pour générer des ondes de surfaces acoustiques (ultrasonores) stationnaires, permettant de créer une interface tactile vibrante pour restituer à l'utilisateur des sensations de texture, d'épaisseur, etc. Les technologies ci-dessus exploitent des ondes dites de Lamb ou de Rayleigh.

Pour simplifier, on prend l'exemple ci-dessous d'un téléphone intelligent, ou smartphone, dont la dalle de surface est une plaque de verre.

Dans un smartphone, une difficulté réside dans le fait que la plaque de verre est souvent encastrée et/ou collée en périphérie. Par ailleurs, la plaque comporte généralement des trous pour des capteurs audio ou d'image et des boutons. Tout cela engendre un amortissement des ondes de surfaces générées par les actionneurs piézoélectriques, qui nuit à l'efficacité de l'interface tactile vibrante.

Dans les modes de réalisation décrits ci-dessous, on prévoit de réaliser la dalle tactile de façon particulière de façon à confiner les vibrations dans une zone déterminée afin de réduire l'amortissement des ondes générées et de fournir des vibrations d'intensité homogène dans une zone utile.

Plus particulièrement, on prévoit d'équiper deux côtés de la dalle tactile de structures constituant des résonateurs de Bragg afin de concentrer les vibrations entre ces deux structures.

La théorie des résonateurs de Bragg est en elle-même connue. En plaçant deux résonateurs ou miroirs de Bragg face à face, les ondes acoustiques générées entre ces deux résonateurs sont contenues dans la surface qui les sépare.

En disposant deux résonateurs de Bragg aux extrémités d'une zone dite utile de la dalle vibrante, les éléments perturbateurs de type orifices étant à l'extérieur de cette zone, on réduit considérablement l'amortissement de vibrations générées par des éléments piézoélectriques disposés entre les résonateurs de Bragg.
Les figures 2A et 2B représentent, de façon très schématique, un mode de réalisation d'une dalle tactile vibrante. La figure 2A est une vue de dessous. La figure 2B est une vue en coupe selon la ligne B-B de la figure 2A.

La dalle 2 comporte une plaque 22 de verre, par exemple approximativement rectangulaire, dans les petits côtés de laquelle sont réalisés deux résonateurs de Bragg 3 se faisant face. Chaque résonateur 3 comporte au moins deux bandes parallèles ayant des indices de réflexion acoustique différents. Dans le mode de réalisation des figures 2A et 2B, on suppose que ces bandes sont réalisées dans un même matériau (le verre de la plaque 22) sous la forme d'une première portion ou mur 32 de réflexion, rectangulaire, perpendiculaire à la surface de la plaque 22 et d'une fente ou deuxième portion 34 d'amortissement, également rectangulaire, derrière le mur 32 par rapport au milieu de la plaque 22.

Les murs 32 délimitent entre eux une zone utile I du point de vue tactile, c'est-à-dire la zone de la dalle 2 dans laquelle les vibrations sont ressenties par l'utilisateur. Dans le mode de réalisation des figures 2A et 2B, deux bandes d'actionneurs piézoélectriques 4, par exemple des lignes d'éléments ponctuels 42 en céramique ou des bandes de matériau piézoélectrique pulvérisées en couche mince, sont réalisées parallèlement aux murs 32, du côté opposé aux fentes 34 (aux extrémités longitudinales de la zone utile I) . Ces bandes 4 sont réalisées le plus près possible des murs 32 en tenant compte des contraintes de la technique de fabrication utilisée.

A l'extérieur de l'espace longitudinal délimité par les résonateurs 3, des zones II de dalle 2 sont perdues du point de vue interface tactile, mais servent à loger les différents éléments qui perturberaient l'homogénéité de l'indice de réflexion acoustique dans la zone utile I. En particulier, c'est dans ces zones II que la plaque de verre 22 comporte de préférence des ouvertures 52 servant au passage de boutons ou autres organes de commande et d'accès à des capteurs sonores et d'image. Ainsi, on améliore la résonance dans la zone centrale I.

De façon très simplifiée, en supposant que les murs sont réalisés dans le même matériau que la plaque, ils présentent un indice de réflexion supérieur à la zone centrale, ce qui participe à la réflexion des ondes acoustiques en direction de l'autre mur, et les fentes présentent un indice de réflexion inférieur au reste de la plaque et favorisent donc l'amortissement des ondes qui franchissent les murs et sortent de la zone utile.

De préférence, les extrémités (les tranches basses) des murs 32 sont bloquées, c'est-à-dire sont tenues au fond du boîtier du smartphone. Toutefois, il convient de ne bloquer que leurs extrémités sans entraver leurs autres faces (les faces latérales) . Ainsi, le reste des éléments du smartphone, sous la dalle 2, est disposé ou réalisé de façon à avoir des ouvertures de passage des murs 32, jusqu'à l'arrière du boîtier. Par exemple, en présence d'une plaquette de circuit imprimé, celle-ci est ouverte à l'aplomb des murs 32. Un avantage de bloquer l'extrémité du résonateur de Bragg est que cela lui confère une longueur (ici une hauteur dans l'orientation de la figure 2B) quasi infinie, donc une meilleure capacité à concentrer les ondes acoustiques dans la zone utile I.

Les portions 32 s'étendent d'un bord longitudinal à l'autre de la dalle tactile, par exemple, en ne laissant subsister qu'un espace nécessaire à la fixation des bords longitudinaux de la plaque 22.

La hauteur des portions 32 dépend de leur indice de réflexion acoustique et de la bande de fréquences des vibrations que l'on souhaite contenir dans la zone centrale I.

Dans l'exemple d'une dalle tactile vibrante, les fréquences ultrasonores utilisées sont, par exemple, comprises entre environ 20 kHz et environ 100 kHz. Cela conduit à une longueur d'onde de l'ordre de 5 à 15 millimètres. Avec des portions 32 dont les extrémités sont libres, une hauteur de 15 millimètres peut ne pas être compatible avec l'épaisseur du smartphone. En bloquant l'extrémité des portions 32, on peut réduire la hauteur des portions 32 à environ 5 à 10 millimètres si elles sont dans le même matériau que la plaque 22, ce qui sera le plus souvent compatible avec l'épaisseur d'un smartphone.

Les résonateurs de Bragg 3 peuvent, selon les modes de réalisation, être réalisés d'une seule pièce avec la plaque 22 (par exemple par moulage, ou par extrusion à partir d'une plaque épaisse) ou être en tout ou partie collés. Par exemple, les fentes 34 sont usinées dans la plaque 22 et les portions verticales 32 sont collées à la plaque.

Par ailleurs, les portions 32 ne sont pas nécessairement en verre, ni transparentes. Par exemple, elles peuvent être en cuivre, en tungstène, en aluminium, etc., en plastique, ou en une combinaison de différents matériaux. De plus, les fentes 34 peuvent être remplies d'un autre matériau pour ajuster le coefficient de réflexion acoustique et améliorer l'amortissement. Selon un autre mode de réalisation, plutôt que de réaliser une fente et une portion verticale, on rapporte en face arrière de la plaque 22 plusieurs bandes parallèles (deux ou plus) ayant des coefficients de réflexion acoustiques différents. Dans le mode de réalisation des figures 2A et 2B, on peut considérer que les portions 32 sont plus épaisses que la plaque 22 et que les portions 34 sont moins épaisses que la plaque 22.

On aurait pu croire que le fait de bloquer les bords longitudinaux de la dalle tactile 2, par exemple en les collant ou en les encastrant dans la coque du smartphone, nuirait de façon significative à la propagation de la résonance piézoélectrique. Cependant, le fait de placer les actionneurs 4 de part et d'autre dans la longueur participe à orienter les ondes acoustiques dans la direction longitudinale qui devient la direction privilégiée.

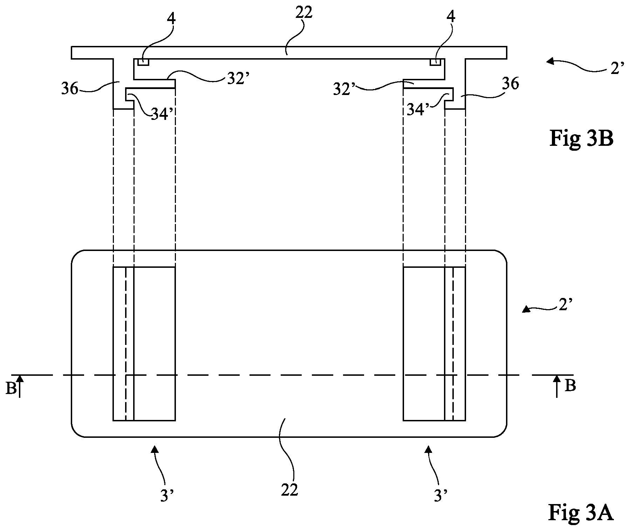

Les figures 3A et 3B représentent, de façon très schématique, un autre mode de réalisation d'une dalle tactile vibrante 2'. La figure 3A est une vue de dessous. La figure 3B est une vue en coupe selon la ligne B-B de la figure 3A.

Selon ce mode de réalisation, les résonateurs ou miroirs de de Bragg 3' sont disposés horizontalement, c'est-à-dire que les (premières) portions de réflexion 32' sont parallèles à la surface de la plaque 22 et non perpendiculaires comme dans le mode de réalisation des figures 2A et 2B. Ces portions 32' sont portées par des (troisièmes) portions verticales 36 (perpendiculaires au plan de la plaque 22) dont les extrémités respectives sont libres. Des fentes d'amortissement (deuxièmes portions) 34' sont réalisées entre les portions 32' et les extrémités des portions 36. Les extrémités des portions 32' sont de préférence fixées. Cette fixation est, au moins dans le cas d'un smartphone, plus facile que dans le mode de réalisation des figures 2A et 2B. En effet, la face arrière d'un smartphone est généralement une coque amovible permettant d'accéder à la batterie et à des cartes (SIM et mémoire). Par conséquent, il peut être peu pratique d'y fixer les extrémités des murs 32 des figures 2A et 2B. Ici, il est préférable que les extrémités des portions 36 soient libres et il est donc aisé de les laisser flottantes à travers les passages ménagés, si nécessaire, dans les éléments situés entre la plaque et la coque. Par ailleurs, les extrémités des portions 32' peuvent être facilement fixées à d'autres parties fixes du smartphone comme, par exemple, une plaquette de circuit imprimée portant des composants.

L'écart (vertical) entre la face arrière de la plaque 22 et les portions 32' dépend de l'épaisseur des actionneurs piézoélectriques 4 qui se trouvent, dans ce mode de réalisation, à l'intérieur de la zone I définie par les portions verticales 36 et à proximité de ces portions.

Un avantage des modes de réalisation décrits est qu'en utilisant des résonateurs de Bragg, on peut atteindre une réflexion proche d'une réflexion totale, ce qui permet d'une part de concentrer les ondes acoustiques dans la zone utile I, et d'autre part d'homogénéiser la propagation dans cette zone utile. En particulier, on tire profit du fait que les organes de commande et ouvertures habituellement présents dans l'écran d'un smartphone sont généralement disposées aux extrémités longitudinales. Ainsi, la division opérée par les résonateurs de Bragg participe à éliminer les éléments d'amortissement de la zone utile.

Un autre avantage est que les réalisations décrites sont compatibles avec la faible épaisseur d'un smartphone et respectent son architecture globale et, en particulier, les zones utiles de l'écran.

Le dimensionnement des résonateurs de Bragg s'effectue, par exemple, à la conception de la dalle tactile vibrante de façon empirique. Par exemple, on peut commencer par résoudre théoriquement les dimensions d'un résonateur de Bragg idéal en fonction des différentes dimensions de la dalle et des indices de réflexion acoustique, puis ajuster les dimensions par essais successifs en cherchant à diminuer la hauteur de la portion 32 ou 32' .

Un autre avantage des modes de réalisation qui ont été décrits est qu'ils réduisent l'amortissement des ondes générées par les actionneurs piézoélectriques sans accroître l'épaisseur de la dalle tactile et en étant compatible avec une fixation de celle-ci en périphérie ou un encastrement de sa périphérie.

Divers modes de réalisation et variantes ont été décrits. Certains modes de réalisation et variantes pourront être combinés et d'autres variantes et modifications apparaîtront à l'homme de l'art. En particulier, les dimensions et dispositions des portions des résonateurs varient selon les applications. De plus, bien que les modes de réalisation aient été décrits en relation avec un exemple appliqué à un smartphone, ils se transposent sans difficulté à d'autres dispositifs électroniques à interface tactile vibrante transparente dans lesquels des problèmes similaires se posent, en particulier dans lesquels on souhaite disposer d'une zone utile transparente à propagation acoustique homogène et intégrer un résonateur de Bragg sans augmenter l'épaisseur du dispositif.

Enfin, la mise en oeuvre pratique des modes de réalisation et variantes qui ont été décrits est à la portée de l'homme de métier à partir des indications fonctionnelles données ci-dessus.

## Revendications

1. Dalle tactile vibrante, comportant :
une plaque transparente (22) ;
deux premières portions allongées (32) parallèles entre elles et en saillie perpendiculairement à un plan dans lequel s'inscrit la plaque, présentant un coefficient de réflexion acoustique supérieur à celui de la plaque, et reliées à une première face de la plaque ;
**caractérisée en ce qu'**elle comporte en outre :
deux deuxièmes portions allongées (34), parallèles entre elles et aux premières portions (32), présentant un coefficient de réflexion acoustique inférieur à celui de la plaque (22) et à celui des premières portions (32) et disposées à l'extérieur d'une zone (I) délimitée par lesdites premières portions (32) ; et
deux bandes d'actionneurs piézoélectriques (4) approximativement parallèles auxdites premières portions (32) et situées entre celles-ci, lesdits actionneurs étant destinés à générer des ondes de surface acoustiques,
lesdites premières portions (32) étant plus épaisses que la plaque (22) et lesdites deuxièmes portions (34) étant moins épaisses que la plaque (22).

2. Dalle tactile vibrante, comportant :
une plaque transparente (22) ;
deux premières portions allongées (32') parallèles entre elles, s'inscrivant dans un plan parallèle à un plan dans lequel s'inscrit la plaque, reliées à la plaque par des portions (36) en saillie perpendiculairement à un plan dans lequel s'inscrit la plaque, présentant un coefficient de réflexion acoustique supérieur à celui de la plaque et reliées à une première face de la plaque ;
**caractérisée en ce qu'**elle comporte en outre :
deux deuxièmes portions allongées (34'), parallèles entre elles et aux premières portions (32'), présentant un coefficient de réflexion acoustique inférieur à celui de la plaque (22) et à celui des premières portions (32') ; et
deux bandes d'actionneurs piézoélectriques (4) approximativement parallèles auxdites portions en saillie (36) et situées entre celles-ci, lesdits actionneurs étant destinés à générer des ondes de surface acoustiques,
lesdites premières portions (32') étant plus épaisses que la plaque (22).

3. Dalle selon la revendication 1 ou 2, dans laquelle des orifices (52) sont ménagés à l'extérieur de ladite zone.

4. Dalle selon l'une quelconque des revendications 1 à 3, dans laquelle lesdites portions forment des résonateurs de Bragg.

5. Dalle selon l'une quelconque des revendications 1 à 4, constituant une dalle tactile vibrante pour smartphone, tablette, montre ou écran d'ordinateur.

6. Dispositif électronique, de préférence téléphone mobile, comportant une dalle tactile (2 ; 2') selon l'une quelconque des revendications 1 à 5.

## Patentansprüche

1. Ein vibrierender Berührungsbildschirm, der Folgendes aufweist:
eine transparente Platte (22);
zwei erste längliche Abschnitte (32), die parallel zueinander sind und senkrecht aus einer Ebene herausragen, in die die Platte passt, und die einen akustischen Reflexionskoeffizienten haben, der größer ist als der der Platte, und die mit einer ersten Oberfläche der Platte verbunden sind;
**dadurch gekennzeichnet, dass** er ferner Folgendes aufweist:
zwei zweite längliche Abschnitte (34), die parallel zueinander und zu den ersten Abschnitten (32) verlaufen, die einen akustischen Reflexionskoeffizienten aufweisen, der kleiner ist als der der Platte (22) und als der der ersten Abschnitte (32), und die außerhalb eines Bereichs (I) angeordnet sind, der von den ersten Abschnitten (32) umgeben ist; und
zwei Streifen piezoelektrischer Aktoren (4), die annähernd parallel zu den ersten Abschnitten (32) und zwischen diesen angeordnet sind, wobei die Aktoren dazu bestimmt sind, akustische Oberflächenwellen zu erzeugen,
wobei die ersten Abschnitte (32) dicker als die Platte (22) sind und die zweiten Abschnitte (34) dünner als die Platte (22) sind.

2. Ein vibrierender Berührungsbildschirm, aufweisend:
eine transparente Platte (22);
zwei erste längliche Abschnitte (32'), die parallel zueinander sind, die in einer Ebene senkrecht zu einer Ebene, in die die Platte passt, eingepasst sind, die mit der Platte über Abschnitten (36) verbunden sind, die senkrecht aus einer Ebene herausragen, in die die Platte passt, die einen akustischen Reflexionskoeffizienten haben, der größer ist als der der Platte, und die mit einer ersten Oberfläche der Platte verbunden sind;
**dadurch gekennzeichnet, dass** er ferner Folgendes aufweist:
zwei zweite längliche Abschnitte (34'), die zueinander und zu den ersten Abschnitten (32') parallel sind und die einen akustischen Reflexionskoeffizienten aufweisen, der kleiner ist als der der Platte (22) und als der der ersten Abschnitte (32'); und
zwei Streifen piezoelektrischer Aktoren (4), die ungefähr parallel zu den vorstehenden Abschnitten (36) verlaufen und zwischen diesen angeordnet sind, wobei die Aktoren dazu bestimmt sind akustische Oberflächenwellen zu erzeugen, wobei die ersten Abschnitte (32') dicker als die Platte (22) sind.

3. Berührungsbildschirm nach Anspruch 1 oder 2, wobei Löcher (52) außerhalb des Bereichs ausgebildet sind.

4. Berührungsbildschirm nach einem der Ansprüche 1 bis 3, wobei die Abschnitte Bragg-Resonatoren bilden.

5. Berührungsbildschirm nach einem der Ansprüche 1 bis 4, der einen vibrierenden Berührungsbildschirm für ein Smartphone, ein Tablet, eine Uhr oder einen Computerbildschirm bildet.

6. Ein elektronisches Gerät, vorzugsweise ein Mobiltelefon, das den Berührungsbildschirm (2; 2') nach einem der Ansprüche 1 bis 5 aufweist.

## Claims

1. A vibrating touch screen, comprising:
a transparent plate (22);
two first elongated portions (32) parallel to each other and perpendicularly protruding from a plane in which the plate fits, having an acoustic reflection coefficient greater than that of the plate, and connected to a first surface of the plate;
**characterized in that** it further includes:
two second elongated portions (34) parallel to each other and to first portions (32), having an acoustic reflection coefficient lower than that of the plate (22) and than that of the first portions (32), and arranged outside an area (I) surrounded by said first portions (32); and
two strips of piezoelectric actuators (4) approximately parallel to said first portions (32) and located therebetween, said actuators being dedicated to generate acoustic surface waves,
said first portions (32) being thicker than the plate (22), and said second portions (34) being thinner than the plate (22) .

2. A vibrating touch screen, comprising:
a transparent plate (22);
two first elongated portions (32') parallel to each other, fitted in a plane perpendicular to a plane in which the plate fits, connected to the plate with portions (36) protruding perpendicularly from a plane in which the plate fits, having an acoustic reflection coefficient greater than that of the plate, and connected to a first surface of the plate;
**characterized in that** it further includes:
two second elongated portions (34') parallel to each other and to first portions (32'), having an acoustic reflection coefficient lower than that of the plate (22) and than that of the first portions (32'); and
two strips of piezoelectric actuators (4) approximately parallel to said protruding portions (36) and located therebetween, said actuators being dedicated to generate acoustic surface waves,
said first portions (32') being thicker than the plate (22) .

3. The touch screen according to claim 1 or 2, wherein holes (52) are formed outside of said area.

4. The touch screen according to any of claims 1 to 3, wherein said portions form Bragg resonators.

5. The touch screen according to any of claims 1 to 4, forming a vibrating touch screen for a smartphone, a tablet, a watch, or a computer screen.

6. An electronic device, being preferably a cell phone, comprising the touch screen (2; 2') of any of claims 1 to 5.
